(19) Europäisches Patentamt
European Patent Office
Office européen des brevets

(11) EP 3 742 084 A1

(12) EUROPEAN PATENT APPLICATION
published in accordance with Art. 153(4) EPC

(43) Date of publication:
25.11.2020 Bulletin 2020/48

(51) Int Cl.:
$F25B\ 41/00$ (2006.01)  $C09K\ 5/04$ (2006.01)
$F24F\ 1/26$ (2011.01)  $F25B\ 1/00$ (2006.01)

(21) Application number: 18899819.9

(22) Date of filing: 12.06.2018

(86) International application number:
PCT/JP2018/022405

(87) International publication number:
WO 2019/138594 (18.07.2019 Gazette 2019/29)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 15.01.2018 JP 2018003900

(71) Applicant: Mitsubishi Electric Corporation
Tokyo 100-8310 (JP)

(72) Inventors:
• NISHIO, Jun
  Tokyo 100-8310 (JP)
• IKEDA, Soshi
  Tokyo 100-8310 (JP)
• NAKAO, Hideto
  Tokyo 100-8310 (JP)
• ISHIMURA, Katsuhiro
  Tokyo 100-8310 (JP)

(74) Representative: Trinks, Ole
Meissner Bolte Patentanwälte
Rechtsanwälte Partnerschaft mbB
Widenmayerstraße 47
80538 München (DE)

(54) **AIR-CONDITIONING DEVICE**

(57) An air-conditioning apparatus includes a refrigerant circuit in which a compressor, a condenser, an expansion unit, and an evaporator are connected by a pipe and through which a working fluid obtained by adding a stabilizer to a refrigerant mixture containing $CF_3I$ flows. The pipe includes a riser gas pipe erected and extending from an outlet of the evaporator to an inlet of the condenser via the compressor. An inner diameter of the riser gas pipe is smaller than or equal to an upper-limit threshold value D1 determined from Math. (1) indicated below.

FIG. 4

**Description**

TECHNICAL FIELD

The present disclosure relates to an air-conditioning apparatus that uses refrigerant with a stabilizer added thereto in order to improve chemical stability.

BACKGROUND ART

For the purpose of suppressing global warming, the GWP of refrigerant is regulated in accordance with the Montreal Protocol and the European F-gas Regulations. Although refrigerant having an operating pressure that is the same as that of R410A and having a low GWP is often flammable, a refrigerant mixture that contains $CF_3I$ (trifluoroiodomethane) is characterized in that the refrigerant mixture has an operating pressure that is almost the same as that of R410A, has a low GWP, and is non-flammable.

In the related art, an air-conditioning apparatus that uses a refrigerant mixture containing $CF_3I$ has been proposed (e.g., see Patent Literature 1). In Patent Literature 1, the refrigerant mixture used contains at least one of 40 % by mass or lower of R32 and 65 % by mass or lower of 125, and 35 % by mass to 80 % by mass of $CF_3I$, whereby the GWP of the air-conditioning apparatus is reduced.

Since $CF_3I$ is known to be chemically unstable and to easily change into $CHF_3$ (trifluoromethane) having a high GWP, stabilizers for suppressing the change have been developed. There has been proposed an air-conditioning apparatus that uses refrigerant obtained by adding a stabilizer to a refrigerant mixture containing $CF_3I$ (e.g., see Patent Literature 2). In Patent Literature 2, the refrigerant used is obtained by adding a diene or diene-based stabilizer to the refrigerant mixture containing $CF_3I$, whereby $CF_3I$ is stabilized.

LIST OF CITATIONS

PATENT LITERATURE

Patent Literature 1: Japanese Unexamined Patent Application Publication JP 8-277389 A
Patent Literature 2: Japanese Unexamined Patent Application Publication JP 2016-176080 A

SUMMARY OF INVENTION

TECHNICAL PROBLEM

However, in the air-conditioning system disclosed in Patent Literature 1, since a stabilizer is not added to $CF_3I$, $CF_3I$ changes into, for example, $CHF_3$, thus causing the GWP to gradually increase. A reaction in which $CF_3I$ changes into another substance occurs prominently in a high-temperature area, such as the outlet of a compressor in operation. In Patent Literature 2, the diene or diene-based stabilizer is susceptible to the effect of gravity since it has a high boiling point and constantly exists in a liquid state. Thus, for example, in a case where there is a riser gas pipe as an erected pipe, the stabilizer may stagnate in the riser gas pipe, thus making it not possible for the stabilizer to circulate throughout the refrigerant circuit.

The present disclosure has been made to solve the aforementioned problems and provides an air-conditioning apparatus that allows a stabilizer to circulate throughout a refrigerant circuit even with the influence of gravity.

SOLUTION TO PROBLEM

An air-conditioning apparatus according to an embodiment of the present disclosure includes a refrigerant circuit in which a compressor, a condenser, an expansion unit, and an evaporator are connected by a pipe and through which a working fluid obtained by adding a stabilizer to a refrigerant mixture containing $CF_3I$ flows. The pipe includes a riser gas pipe erected and extending from an outlet of the evaporator to an inlet of the condenser via the compressor. An inner diameter of the riser gas pipe is smaller than or equal to an upper-limit threshold value D1 determined from Math. (1) indicated below.

Math. 1

$$Ug = 0.8 \times (g \times D1(rl - rg)/rg)^{0.5} \qquad \ldots(1)$$

Ug: flow speed [m/s] of gas
D1: inner diameter [m] of pipe
g: gravitational acceleration [m/s$^3$] rl: liquid density [kg/m$^3$] of stabilizer
rg: gas density [kg/m$^3$] of refrigerant

ADVANTAGEOUS EFFECTS OF INVENTION

According to an embodiment of the present disclosure, since the inner diameter of the riser gas pipe is smaller than or equal to the upper-limit threshold value D1, a refrigerant flow speed at which the stabilizer does not stagnate is obtained. Therefore, the refrigerant flows upward against gravity through the riser gas pipe. Consequently, the stabilizer is circulated throughout the refrigerant circuit even when affected by gravity.

BRIEF DESCRIPTION OF DRAWINGS

FIG. 1    is a circuit diagram illustrating an air-conditioning apparatus 100 according to Embodiment 1 of the present disclosure.

FIG. 2    is a circuit diagram illustrating the flow of refrigerant during the cooling operation in Embodiment 1 of the present disclosure.

FIG. 3    is a circuit diagram illustrating the flow of the refrigerant during the heating operation in Embodiment 1 of the present disclosure.

FIG. 4    schematically illustrates a riser gas pipe 50 according to Embodiment 1 of the present disclosure.

FIG. 5    is a circuit diagram illustrating an air-conditioning apparatus 100a according to a modification of Embodiment 1 of the present disclosure.

FIG. 6    is a circuit diagram illustrating an air-conditioning apparatus 200 according to Embodiment 2 of the present disclosure.

FIG. 7    is a circuit diagram illustrating an air-conditioning apparatus 200a according to a modification of Embodiment 2 of the present disclosure.

FIG. 8    is a triangular graph illustrating the composition of refrigerant according to Embodiment 3 of the present disclosure.

FIG. 9    is a triangular graph illustrating the composition of refrigerant according to Embodiment 4 of the present disclosure.

DESCRIPTION OF EMBODIMENTS

Embodiment 1

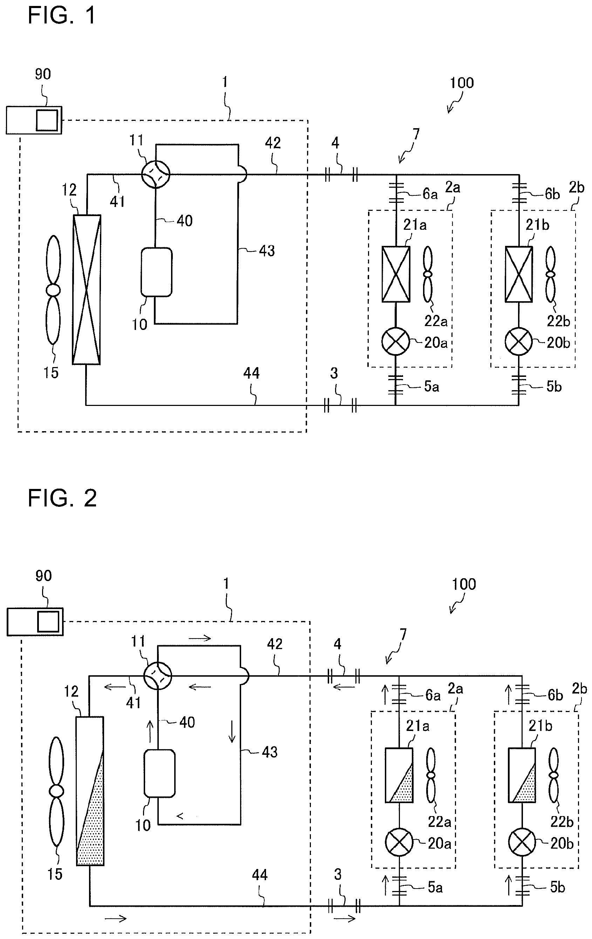

An air-conditioning apparatus according to Embodiment 1 of the present disclosure will be described below with reference to the drawings. FIG. 1 is a circuit diagram illustrating an air-conditioning apparatus 100 according to Embodiment 1 of the present disclosure. As illustrated in FIG. 1, the air-conditioning apparatus 100 includes a refrigerant circuit 7 in which a single outdoor unit 1 and two indoor units 2 are connected by a liquid main pipe 3, a gas main pipe 4, liquid branch pipes 5a and 5b, and gas branch pipes 6a and 6b.

The air-conditioning apparatus 100 performs cooling only operation where both of the two indoor units 2a and 2b perform the cooling operation and heating only operation where both of the two indoor units 2a and 2b perform the heating operation. Although the outdoor unit 1 is exemplified as being a single unit, two or more units may also be possible. Furthermore, although the indoor units 2a and 2b are exemplified as being two units, a single unit is also possible or three or more units are also possible.

Outdoor Unit 1

The outdoor unit 1 is installed outdoors, such as outside a room, and functions as a heat source unit that discards or supplies heat generated from air-conditioning. The outdoor unit 1 has a compressor 10, a flow switching device 11, a first heat exchanger 12, a heat-source-side air-sending device 15, and a controller 90.

Compressor 10, Flow Switching Device 11

The compressor 10 suctions low-temperature low-pressure refrigerant, and compresses the suctioned refrigerant to discharge high-temperature high-pressure refrigerant. The compressor 10 is, for example, a capacity-controllable inverter compressor. The compressor 10 may be two compressors. The flow switching device 11 connects a discharge pipe 40 connected to the discharge side of the compressor 10 and a suction pipe 43 connected to the suction side of the compressor 10. The flow switching device 11 connects a first pipe 41 connected to the first heat exchanger 12 and a second pipe 42 that connects to the liquid main pipe 3 connected to second heat exchangers 21a and 21b. The flow switching device 11 switches the direction in which the refrigerant flows in the refrigerant circuit 7 and is, for example, a four-way valve.

The flow switching device 11 switches the flow of the refrigerant discharged from the compressor 10 toward the first heat exchanger 12 (solid line in FIG. 1) or toward the indoor units 2 (dashed lines in FIG. 1), whereby either one of the cooling operation and the heating operation is performed. The flow switching device 11 may alternatively be omitted. In this case, the air-conditioning apparatus 100 functions as a dedicated cooling or refrigerating apparatus.

First Heat Exchanger 12, Heat-Source-Side Air-Sending Device 15

The first heat exchanger 12 is connected to a third pipe 44 between the flow switching device 11 and the indoor units 2a and 2b and is an outdoor heat exchanger that causes heat exchange to be performed between outdoor air and the refrigerant. The first heat exchanger 12 functions as a condenser or a gas cooler during the cooling operation, and functions as an evaporator during the heating operation. The heat-source-side air-sending device 15 is provided near the first heat exchanger 12 and is a fan that sends outdoor air to the first heat exchanger 12.

Indoor Units 2a and 2b

The two indoor units 2a and 2b are installed indoors, such as inside a room, and supplies air-conditioned air into the room. The indoor units 2a and 2b have expansion units 20a and 20b, the second heat exchangers 21a and 21b, and load-side air-sending devices 22a and 22b, respectively.

Expansion Units 20a and 20b

The expansion units 20a and 20b are connected to the liquid branch pipes 5a and 5b between the first heat exchanger 12 and the second heat exchangers 21a and 21b, and are pressure reducing valves or expansion valves that expand the refrigerant by reducing the pressure thereof. Each of the expansion units 20a and 20b is, for example, an electronic expansion valve whose opening degree is adjusted.

Second Heat Exchangers 21a and 21b, Load-Side Air-Sending Devices 22a and 22b

The second heat exchangers 21a and 21b are connected to the gas branch pipes 6a and 6b between the expansion units 20a and 20b and the flow switching device 11, and are indoor heat exchangers that cause heat exchange to be performed between the indoor air and the refrigerant to exchange heat with each other. The second heat exchangers 21a and 21b function as evaporators during the cooling operation, and function as condensers or gas coolers during the heating operation. The load-side air-sending devices 22a and 22b are provided near the second heat exchangers 21a and 21b and are fans that send indoor air to the second heat exchangers 21a and 21b.

The refrigerant circuit 7 includes the compressor 10, the flow switching device 11, the first heat exchanger 12, the expansion units 20a and 20b, and the second heat exchangers 21a and 21b that are connected by pipes. As an alternative to Embodiment 1 in which the first heat exchanger 12 is described as being an outdoor heat exchanger and the second heat exchangers 21a and 21b are described as being indoor heat exchangers, the numbers thereof may be inverted. Specifically, the first heat exchanger may be an indoor heat exchanger and the second heat exchangers may be outdoor heat exchangers.

Working Fluid

A working fluid flowing through the refrigerant circuit 7 is obtained by adding a stabilizer that suppresses a reaction of $CF_3I$ to a refrigerant mixture containing $CF_3I$. $CF_3I$ has an extremely low GWP of 0.4. $CF_3I$ has a function of suppressing a combustion reaction and is used in, for example, fire extinguishers. Therefore, a refrigerant mixture containing $CF_3I$ is characterized in having a low GWP and low flammability. Since $CF_3I$ is chemically unstable and may change into $CHF_3$ having a high GWP, a stabilizer is added to $CF_3I$.

Stabilizer

The stabilizer suppresses a reaction in which $CF_3I$ changes into another substance as a result of decomposition, combination, or partial atomic replacement. The stabilizer is constantly a liquid within the temperature and pressure ranges in the refrigerant circuit 7. The stabilizer is, for example, butadiene or isoprene, which is a diene or diene-based compound. With regard to the temperature and pressure ranges of the refrigerant circuit 7, for example, in the refrigerant circuit 7 with R410A as the working fluid, the evaporating temperature is 0 °C, the evaporating pressure is 0.8 MPa, the condensing temperature is 50 °C, and the condensing pressure is 3.1 MPa. Since butadiene has a boiling point (saturation temperature) of -4 °C at the atmospheric pressure and a boiling point of 20 °C at 0.24 MPa, boiling points at 0.8 MPa and 3.1 MPa are estimated in accordance with the Clausius-Clapeyron equation indicated below in Math. (2).

Math. 2

$$P_1 = P_0 \times \exp[\Delta H/R \times (1/T_0 - 1/T_1)] \qquad \ldots(2)$$

Pi: saturation pressure [MPa] Po: atmospheric pressure [MPa] $\Delta H$: molar latent heat of vaporization [J/mol] R: gas constant [J/(K mol)] To: boiling point [K] at atmospheric pressure
$T_1$: boiling point (saturation temperature) [K] at Pi

The boiling point of butadiene is estimated to be 63 °C at 0.8 MPa and 128 °C at 3.1 MPa. Specifically, at the same pressure, the boiling point of butadiene is higher than the saturation temperature of R410A. The boiling point of isoprene is 34 °C at the atmospheric pressure and is higher than the boiling point of butadiene. Accordingly, the substance used as a stabilizer is conceived to have a boiling point higher than the saturation temperature of the refrigerant and constantly exists in the liquid state in the refrigerant circuit 7.
Because the stabilizer constantly exists as a liquid, the refrigerant flows as gas and the stabilizer flows as a liquid membrane in a riser gas pipe 50 having differences in height. In this case, if the flow speed of the gas is low, the liquid membrane cannot move from a low location to a high location, thus causing the liquid to stagnate.

Controller 90

The controller 90 controls the entire air-conditioning apparatus 100 and is an analog circuit, a digital circuit, a CPU, or a combination of at least two of the above. The controller 90 controls, for example, the frequency of the compressor 10, the rotation speed of the heat-source-side air-sending device 15, the switching of the flow switching device 11, and the opening degrees of the expansion units 20a and 20b based on detection signals of sensors. Examples of the sensors include a discharge pressure detector, a suction pressure detector, a discharge temperature detector, a temperature detector for the refrigerant flowing through the first heat exchanger 12, a temperature detector for the refrigerant flowing through the second heat exchangers 21a and 21b, and an indoor temperature detector.
Furthermore, the controller 90 controls, for example, the frequency of the compressor 10, the rotation speed of the heat-source-side air-sending device 15, the switching of the flow switching device 11, and the opening degrees of the expansion units 20a and 20b based on a command from a remote control (not illustrated). Accordingly, a cooling only operation mode or a heating only operation mode is performed.
Although a case where the controller 90 is provided in the outdoor unit 1 is exemplified in Embodiment 1, the controller 90 may be provided in one of or each of the indoor units 2a and 2b. Furthermore, the controller 90 may be provided in one of the outdoor unit 1 and the indoor units 2a and 2b, or may be provided in a unit different from the outdoor unit 1 and the indoor units 2a and 2b.

Operation Modes

Next, the operation modes of the air-conditioning apparatus 100 will be described. As mentioned above, the air-conditioning apparatus 100 has cooling only operation and heating only operation as operation modes. In the cooling only operation, cooling-energy load is generated at the second heat exchangers 21a and 21b, and the cooling operation is performed by all the indoor units 2 that are driven. In the heating only operation, heating-energy load is generated at the second heat exchangers 21a and 21b, and the heating operation is performed by all the indoor units that are driven.

Cooling Only Operation

FIG. 2 is a circuit diagram illustrating the flow of the refrigerant during the cooling operation in Embodiment 1 of the present disclosure. Next, the operation of the air-conditioning apparatus 100 in each operation mode will be described. First, the cooling only operation will be described. In the cooling only operation, the discharge side of the compressor 10 and the first heat exchanger 12 are connected by the flow switching device 11. In each of the first heat exchanger 12 and the second heat exchangers 21a and 21b, the proportion of liquid refrigerant flowing therein is indicated by a hatch pattern in FIG. 2. As indicated with solid arrows in FIG. 2, in the cooling only operation, the refrigerant suctioned into the compressor 10 is compressed by the compressor 10 and is discharged therefrom in a high-temperature high-pressure gas state.

The high-temperature high-pressure gas refrigerant discharged from the compressor 10 passes through the flow switching device 11 and flows into the first heat exchanger 12 functioning as a condenser. In the first heat exchanger 12, the refrigerant condenses and liquefies by causing heat exchange to be performed between heat and outdoor air sent by the heat-source-side air-sending device 15. The condensed refrigerant in the liquid state flows into the indoor units 2a and 2b by traveling through the liquid main pipe 3 and the liquid branch pipes 5a and 5b.

In the indoor units 2a and 2b, the refrigerant flows into the expansion units 20a and 20b and is turned to be low-temperature low-pressure two-phase gas-liquid refrigerant by being expanded and reduced in pressure in the expansion units 20a and 20b. Then, the two-phage gas-liquid refrigerant flows into the second heat exchangers 21a and 21b functioning as evaporators, and evaporates and gasifies in the second heat exchangers 21a and 21b by exchanging heat with indoor air sent by the load-side air-sending devices 22a and 22b. At this time, the indoor air is cooled, so that cooling is performed in each room. The evaporated refrigerant in the low-temperature low-pressure gas state travels through the gas branch pipes 6a and 6b and the gas main pipe 4, passes through the flow switching device 11, and is suctioned into the compressor 10.

Heating Only Operation

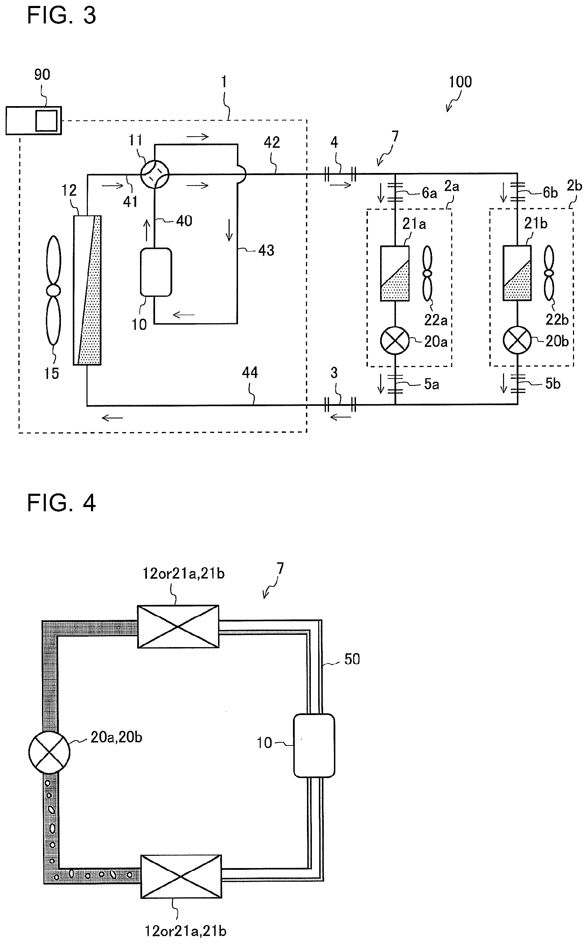

FIG. 3 is a circuit diagram illustrating the flow of the refrigerant during the heating only operation of the air-conditioning apparatus 100 according to Embodiment 1 of the present disclosure. Next, the heating only operation will be described. In the heating only operation, the discharge side of the compressor 10 and the second heat exchangers 21a and 21b are connected by the flow switching device 11. In each of the first heat exchanger 12 and the second heat exchangers 21a and 21b, the proportion of liquid refrigerant flowing therein is indicated by a hatch pattern in FIG. 3.

As indicated with solid arrows in FIG. 3, in the heating only operation, the refrigerant suctioned into the compressor 10 is compressed by the compressor 10 and is discharged in therefrom in a high-temperature high-pressure gas state. The high-temperature high-pressure gas refrigerant discharged from the compressor 10 passes through the flow switching device 11, travels through the gas branch pipes 6a and 6b and the gas main pipe 4, and flows into the indoor units 2a and 2b. In the indoor units 2a and 2b, the refrigerant flows into the second heat exchangers 21a and 21b functioning as condensers, and condenses and liquefies in the second heat exchangers 21a and 21b by exchanging heat with indoor air sent by the load-side air-sending devices 22a and 22b. At this time, the indoor air is heated, so that heating is performed in each room.

The condensed refrigerant in the liquid state is turned to be low-temperature low-pressure two-phase gas-liquid refrigerant by being expanded and reduced in pressure in the expansion units 20a and 20b. Then, the two-phage gas-liquid refrigerant travels through the liquid main pipe 3 and the liquid branch pipes 5a and 5b and flows into the first heat exchanger 12 functioning as an evaporator. In the first heat exchanger 12, the refrigerant evaporates and gasifies by exchanging heat with outdoor air sent by the heat-source-side air-sending device 15. The evaporated refrigerant in the low-temperature low-pressure gas state passes through the flow switching device 11, and is suctioned into the compressor 10.

Riser Gas Pipe 50

Next, the riser gas pipe 50 will be described. During the cooling operation, the first heat exchanger 12 functions as a condenser, and the second heat exchangers 21a and 21b function as evaporators. At this time, there is a large amount of liquid refrigerant in the pipe extending from the outlet of the first heat exchanger 12 functioning as a condenser to the inlet of each of the second heat exchangers 21a and 21b functioning as evaporators. Therefore, the stabilizer, which is a liquid, dissolves in or flows along with the liquid refrigerant without stagnating.

On the other hand, there is a large amount of gas refrigerant in the pipe extending from the outlet of each of the second heat exchangers 21a and 21b functioning as evaporators to the inlet of the first heat exchanger 12 functioning as a condenser. Therefore, the stabilizer, which is a liquid, flows in accordance with a shearing force generated between the stabilizer and the gas refrigerant. In a case where the pipe extends from a low location to a high location, if the shearing force generated between the stabilizer and the gas refrigerant is smaller than gravity, the stabilizer cannot flow upward through the pipe and thus stagnates.

During the heating operation, the second heat exchangers 21a and 21b function as condensers, and the first heat exchanger 12 functions as an evaporator. At this time, there is a large amount of liquid refrigerant in the pipe extending from the outlet of each of the second heat exchangers 21a and 21b functioning as condensers to the inlet of the first heat exchanger 12 functioning as an evaporator. Therefore, the stabilizer, which is a liquid, dissolves in or flows along with the liquid refrigerant without stagnating.

On the other hand, there is a large amount of gas refrigerant in the pipe extending from the outlet of the first heat exchanger 12 functioning as an evaporator to the inlet of each of the second heat exchangers 21a and 21b functioning as condensers. Therefore, the stabilizer, which is a liquid, flows in accordance with a shearing force generated between the stabilizer and the gas refrigerant. In a case where the pipe extends from a low location to a high location, if the shearing force generated between the stabilizer and the gas refrigerant is smaller than gravity, the stabilizer cannot flow upward through the pipe and thus stagnates.

FIG. 4 schematically illustrates the riser gas pipe 50 according to Embodiment 1 of the present disclosure. As illustrated in FIG. 4, a pipe extending from a low location to a high location and existing between an outlet of an evaporator and an inlet of an evaporator is referred to as a riser gas pipe 50. The riser gas pipe 50 may be erected perpendicularly to the ground, or may be tilted at an angle larger than 0° and smaller than 90° relative to the ground. The length of the riser gas pipe 50 may be several meters or longer for connecting between the outdoor unit 1 and each indoor unit 2, or may be several tens of meters within each indoor unit 2.

In FIG. 1, the riser gas pipe 50 may be any one of the pipe that connects the discharge side of the compressor 10 and the flow switching device 11, the gas branch pipes 6a and 6b, the gas main pipe 4, the pipe that connects the gas main pipe 4 and the flow switching device 11, and the pipe that connects the flow switching device 11 and the suction side of the compressor 10.

In a case where the riser gas pipe 50 is perpendicular to the ground, stagnation tends to occur since the effect of gravity acting oppositely to the flow of the refrigerant is at maximum. When the liquid stabilizer flows annularly through the riser gas pipe 50 extending perpendicularly to the ground, the condition in which stagnation occurs can be estimated from the Wallis Formula indicated below in Math. (1).

Math. 1

$$Ug = 0.8 \times (g \times D1(rl - rg)/rg)^{0.5} \qquad \ldots (1)$$

Ug: flow speed [m/s] of gas
D1: inner diameter [m] of pipe
g: gravitational acceleration [m/s$^3$] rl: liquid density [kg/m$^3$] of stabilizer
rg: gas density [kg/m$^3$] of refrigerant

Accordingly, an upper-limit threshold value D1 for the inner diameter of the pipe at which stagnation occurs is determined from the flow rate of the refrigerant in the air-conditioning apparatus 100 and from Math. (1), and the inner diameter of the riser gas pipe 50 is set to be smaller than or equal to the upper-limit threshold value D1, so that the liquid stabilizer can be prevented from stagnating. Because the flow rate of the refrigerant in the air-conditioning apparatus 100 changes in accordance the cooling/heating load during operation, the upper-limit threshold value D1 is desirably set to an upper-limit threshold value Dlmin at which stagnation of the stabilizer does not occur even when the flow rate of the refrigerant is at a minimum value Grmin.

In a case where the upper-limit threshold value D1 is set to be larger than D1min, since the stabilizer may stagnate when the operation is continuously performed at Grmin, the flow rate of the refrigerant needs to be increased regularly. Since the cooling/heating capacity increases or decreases in accordance with an increase or decrease in the flow rate of the refrigerant, the room temperature is not stabilized, resulting in loss of comfort.

To prevent stagnation of the stabilizer, it is effective to increase the flow speed by reducing the inner diameter of the pipe in accordance with the minimum value for the flow rate of the refrigerant.

However, the pressure loss may become excessive in an operating condition where the flow rate of the refrigerant is large. When the pressure loss in the pipe extending from the outlet of an evaporator to the inlet of the compressor 10 increases, the suction density in the compressor 10 decreases and the cooling/heating capacity decreases. In addition, the input of the compressor 10 increases, resulting in a lower COP. If the pressure loss is significantly large, the suction pressure falls below the atmospheric pressure, possibly causing air to mix into the refrigerant circuit 7.

To prevent the suction pressure from being lower than or equal to the atmospheric pressure due to pressure loss, a pressure loss ΔP determined from the Darcy-Weisbach equation indicated below in Math. (3.1), Math. (3.2), and Math. (3.3) needs to be equal to a difference between an evaporating pressure Pe and an atmospheric pressure Patm. Specifically, it is necessary to determine a lower-limit threshold value D2 for the inner diameter of the pipe at which ΔP = Pe - Patm, and to set the inner diameter of the pipe to the lower-limit threshold value D2 or larger.

Math. 3

$$Pe - \Delta P = Patm \qquad \ldots(3.1)$$

$$\Delta P = f \times L/D2 \times rg \times Ug^2/2 \qquad \ldots(3.2)$$

$$f = 0.3164Re^{-0.25} \quad (3.3)$$

Pe: evaporating pressure [Pa] $\Delta P$: pressure loss [Pa] Patm: atmospheric pressure [Pa] f: pipe friction coefficient [-]
L: pipe length [m] D2: inner diameter [m] of pipe
rg: gas density [kg/m$^3$] of refrigerant
Ug: flow speed [m/s] of gas
Re: Reynolds number [-]

The lower-limit threshold value D2 is desirably set to a value at which the suction pressure does not become lower than or equal to the atmospheric pressure even when the
flow rate of the refrigerant is at a maximum value. Furthermore, when the pressure loss in the pipe extending from the outlet of the compressor 10 to the inlet of a condenser increases, the input of the compressor 10 increases in accordance with an increase in the discharge pressure, resulting in a lower COP. To reduce a decrease in COP, the pipe extending from the outlet of the compressor 10 to the inlet of the condenser also desirably has an inner diameter that is larger than or equal to the lower-limit threshold value D2.
Upper-Limit Threshold Value D1 and Lower-Limit Threshold Value D2
Next, a calculation example of the upper-limit threshold value D1 and the lower-limit threshold value D2 will be described. A flow rate Gr of the refrigerant is expressed as Gr = Q/$\Delta$H, Q denoting the cooling/heating capacity and $\Delta$H denoting the latent heat of the refrigerant. The flow rate and the flow speed of gas have the relationship Gr = Ug$\times$rg$\times$$\pi$D2/4, $\pi$ being the circumference ratio. By substituting these mathematical formulas into Math. (1) and rearranging the upper-limit threshold value D1, Math. (4) indicated below is derived.
Math. 4

$$D1 = (16 \times Q^2/(\Delta H^2 \times 0.8^2 \times g \times rg \times (rl - rg) \times \pi^2))^{0.2} \qquad \ldots(4)$$

Q: cooling/heating capacity [kW] $\Delta$H: latent heat of refrigerant [kJ/kg]
Furthermore, when a relational formula with respect to the lower-limit threshold value D2 is rearranged, Math. (5) indicated below is derived.
Math. 5

$$D2 = 2^{2.5} \times 0.3164 \times \mu^{0.25} \times Gr^{1.75} \times L/(\pi^{1.75} \times (Pe - Patm) \times rg)^{1/4.75} \qquad \ldots(5)$$

$\mu$: viscosity coefficient [Pa·s]
An example where isoprene with a liquid density of 640 kg/m$^3$ is added as a stabilizer to a refrigerant mixture with a 50:50 ratio of R32 and CF$_3$I will be considered. Assuming that cooling is performed during the summertime, when the upper-limit threshold value D1 is determined under a condition in which the condensing temperature is 50 °C, the condenser outlet temperature is 40 °C, and the evaporating temperature is 10 °C, Table 1 is obtained in accordance with the cooling/heating capacity Q.

Table 1

| Cooling Capacity [kW] | 1 | 2 | 3 | 4 | 5 |
|---|---|---|---|---|---|
| D1 (Suction Side) [mm] | 14 | 18 | 21 | 24 | 26 |
| D1 (Discharge Side) [mm] | 11 | 15 | 17 | 19 | 21 |

As indicated in Table 1, in an air-conditioning apparatus 100 in which the operating range includes a cooling capacity of 5 kW, the inner diameter is desirably 26 mm or smaller at the suction side and 21 mm or smaller at the discharge side. In an air-conditioning apparatus 100 in which the operating range includes a cooling capacity of 4 kW, the inner diameter is desirably 24 mm or smaller at the suction side and 19 mm or smaller at the discharge side.

In an air-conditioning apparatus 100 in which the operating range includes a cooling capacity of 3 kW, the inner diameter is desirably 21 mm or smaller at the suction side and 17 mm or smaller at the discharge side. In an air-conditioning apparatus 100 in which the operating range includes a cooling capacity of 2 kW, the inner diameter is desirably 18 mm or smaller at the suction side and 15 mm or smaller at the discharge side. In an air-conditioning apparatus 100 in which the operating range includes a cooling capacity of 1 kW, the inner diameter is desirably 14 mm or smaller at the suction side and 11 mm or smaller at the discharge side. The calculation is similarly possible in conditions other than those indicated in Table 1.

A case where isoprene with a liquid density of 640 kg/m$^3$ is added as a stabilizer to a refrigerant mixture with a 50:50 ratio of R32 and $CF_3I$ will be considered. Assuming that cooling is performed during the summertime, when the lower-limit threshold value D2 is determined under a condition in which the condensing temperature is 50 °C, the condenser outlet temperature is 40 °C, and the evaporating temperature is 10 °C, Table 2 is obtained in accordance with the cooling/heating capacity Q and the pipe length L. In Table 2, examples of a riser pipe with a length L of about 1 m include a pipe inside the outdoor unit 1, a pipe inside any of the indoor units 2, and a pipe that connects the outdoor unit 1 and the indoor unit 2a or 2b in a room-air-conditioning apparatus. An example of a riser pipe with a length L of about 100 m includes a pipe that connects the outdoor unit 1 and any of the indoor units 2 in a multi-air-conditioning apparatus for buildings.

Table 2

| L = 1 m | | | | | | |
|---|---|---|---|---|---|---|
| Cooling Capacity [kW] | 4 | 8 | 12 | 16 | 20 | 24 |
| D2 [mm] | 3 | 4 | 4 | 5 | 5 | 6 |
| L = 100 m | | | | | | |
| Cooling Capacity [kW] | 4 | 8 | 12 | 16 | 20 | 24 |
| D2 [mm] | 8 | 10 | 11 | 13 | 14 | 15 |

As indicated in Table 2, in an air-conditioning apparatus 100 in which the operating range includes a cooling capacity of 4 kW, the riser gas pipe 50 with a length of about 1 m desirably has an inner diameter of 3 mm or larger, and the riser gas pipe 50 with a length of about 100 m desirably has an inner diameter of 8 mm or larger. In an air-conditioning apparatus 100 in which the operating range includes a cooling capacity of 8 kW, the riser gas pipe 50 with a length of about 1 m desirably has an inner diameter of 4 mm or larger, and the riser gas pipe 50 with a length of about 100 m desirably has an inner diameter of 10 mm or larger. In an air-conditioning apparatus 100 in which the operating range includes a cooling capacity of 12 kW, the riser gas pipe 50 with a length of about 1 m desirably has an inner diameter of 4 mm or larger, and the riser gas pipe 50 with a length of about 100 m desirably has an inner diameter of 11 mm or larger.

In an air-conditioning apparatus 100 in which the operating range includes a cooling capacity of 16 kW, the riser gas pipe 50 with a length of about 1 m desirably has an inner diameter of 5 mm or larger, and the riser gas pipe 50 with a length of about 100 m desirably has an inner diameter of 13 mm or larger. In an air-conditioning apparatus 100 in which the operating range includes a cooling capacity of 20 kW, the riser gas pipe 50 with a length of about 1 m desirably has an inner diameter of 5 mm or larger, and the riser gas pipe 50 with a length of about 100 m desirably has an inner diameter of 14 mm or larger.

In an air-conditioning apparatus 100 in which the operating range includes a cooling capacity of 24 kW, the riser gas pipe 50 with a length of about 1 m desirably has an inner diameter of 6 mm or larger, and the riser gas pipe 50 with a length of about 100 m desirably has an inner diameter of 15 mm or larger. The calculation is similarly possible in conditions other than those indicated in Table 2.

An example of the air-conditioning apparatus 100 is, but not limited to, a multi-air-conditioning apparatus for buildings, with a rated capacity of 8 horsepower. In such a multi-air-conditioning apparatus for buildings, an operating condition in which the cooling capacity decreases is a condition in which only one of the plurality of connected indoor units 2 is in operation.

Because a small-capacity indoor unit 2 has a rated capacity of, for example, about 1.5 horsepower, 1.5 horsepower equals a cooling capacity of 4.2 kW. When a calculation is conducted under the conditions in Table 1, D1 at the suction side is 24 mm, and D1 at the discharge side is 19 mm. When a calculation is conducted under the conditions in Table 2 with respect to a rated cooling capacity of 22.4 kW, D2 is 15 mm when L = 100 m.

According to Embodiment 1, since the inner diameter of the riser gas pipe 50 is smaller than or equal to the upper-limit threshold value D1, a refrigerant flow speed at which the stabilizer does not stagnate is obtained.

Therefore, the refrigerant flows upward against gravity through the riser gas pipe 50. Consequently, the stabilizer is circulated throughout the refrigerant circuit 7 even with the effect of gravity. Moreover, since the inner diameter of the riser gas pipe 50 is larger than or equal to the lower-limit threshold value D2, a situation where the pressure loss becomes lower than or equal to the atmospheric pressure is suppressed. Accordingly, in Embodiment 1, the stabilizer is circulated throughout the refrigerant circuit 7 without the cooling/heating capacity and the COP decreasing due to excessive pressure loss. Consequently, $CF_3I$ circulates constantly in a stable state, whereby an air-conditioning apparatus 100 that uses low-GWP non-flammable refrigerant as a working fluid is realized.

Modification

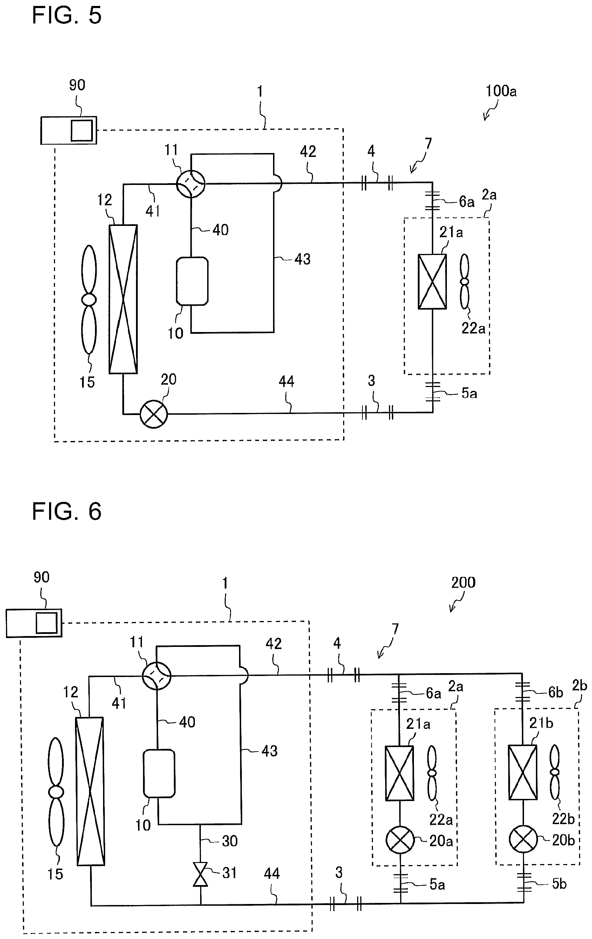

FIG. 5 is a circuit diagram illustrating an air-conditioning apparatus 100a according to a modification of Embodiment 1 of the present disclosure. As illustrated in FIG. 5, the modification is different from Embodiment 1 in that only a single indoor unit 2 is provided and that an expansion unit 20 is provided in the outdoor unit 1. The expansion unit 20 is provided in a pipe that is located upstream of the first heat exchanger 12 during the heating operation.

Other than the fact that the expansion unit 20 is provided in the outdoor unit 1, the expansion unit 20 has a function similar to that of each of the expansion units 20a and 20b according to Embodiment 1. The modification is used in, for example, a room-air-conditioning apparatus. In the modification, the riser gas pipe 50 is configured similarly to that in Embodiment 1 so that stagnation of the stabilizer can be eliminated.

Embodiment 2

FIG. 6 is a circuit diagram illustrating an air-conditioning apparatus 200 according to Embodiment 2 of the present disclosure. Embodiment 2 is different from Embodiment 1 in that an injection pipe 30 and an injection valve 31 are provided. In Embodiment 2, components identical to those in Embodiment 1 are given the same reference signs, and descriptions thereof will be omitted. The following description mainly focuses on the differences from Embodiment 1.

As illustrated in FIG. 6, the injection pipe 30 branches off from the outlet of the first heat exchanger 12 functioning as a condenser during the cooling operation and is connected to the inlet of the compressor 10. The injection valve 31 is provided in the injection pipe 30 and adjusts the amount of working fluid flowing to the injection pipe 30. The controller 90 performs control to open the injection valve 31 if a driving frequency f of the compressor 10 is lower than a frequency threshold value f0.

The controller 90 performs control to open the injection valve 31 if the driving frequency f of the compressor 10 is higher than or equal to the frequency threshold value f0. During the cooling operation, the controller 90 injects low-temperature refrigerant flowing out from the first heat exchanger 12 functioning as a condenser into the suction side of the compressor 10, thereby cooling the compressor 10.

Immediately after the air-conditioning apparatus 200 is activated, the flow of the refrigerant and the stabilizer has not reached a steady state, and it takes time for the stabilizer to circulate through the circuit and return to the compressor 10. Furthermore, immediately after the air-conditioning apparatus 100 is activated, the flow rate of the refrigerant is often reduced to prevent a drastic decrease in low pressure. This tends to cause the stabilizer to stagnate in the riser gas pipe 50. The discharge side of the compressor 10 tends to reach the highest temperature in the air-conditioning apparatus 200, and is a location where $CF_3I$ tends to be unstable.

Therefore, it is desirable to constantly supply the stabilizer even immediately after the activation. In Embodiment 2, the injection valve 31 is controlled to cause the mixture of the liquid refrigerant and the stabilizer to flow toward the suction side of the compressor 10 through the injection pipe 30, so that a portion of the stabilizer flowing through a condenser returns to the compressor 10 without passing through an evaporator. Accordingly, the stabilizer can continue to flow toward the discharge side of the compressor 10 until the stabilizer in the condenser is depleted.

Modification

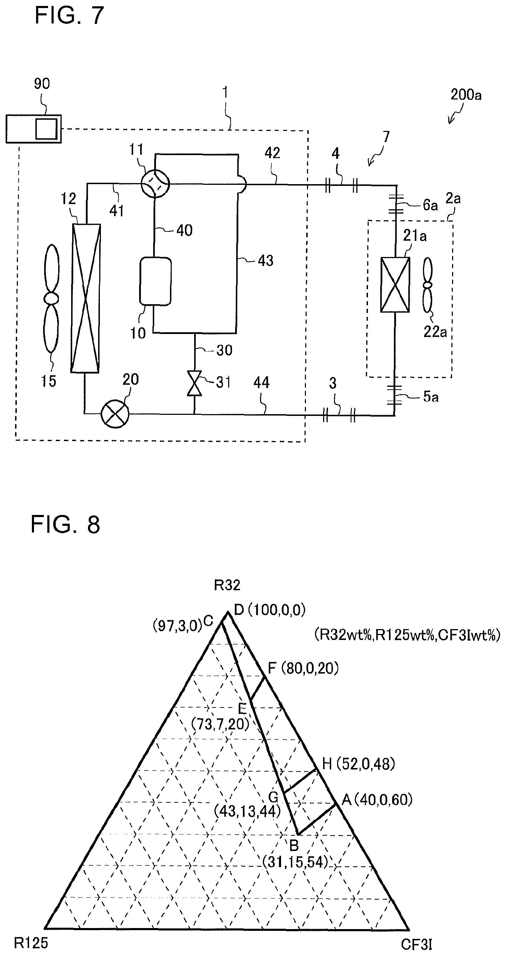

FIG. 7 is a circuit diagram illustrating an air-conditioning apparatus 200a according to a modification of Embodiment 2 of the present disclosure. As illustrated in FIG. 7, the modification is different from Embodiment 2 in that only a single indoor unit 2 is provided and that the expansion unit 20 is provided in the outdoor unit 1. The expansion unit 20 is provided in a pipe that is located upstream of the first heat exchanger 12 during the heating operation.

The injection pipe 30 is connected to the upstream side of the expansion unit 20 in the direction of the flow during the heating operation, but may alternatively be connected to the downstream side of the expansion unit 20 in the direction of the flow during the heating operation. The controller 90 performs control to open the injection valve 31 if the driving frequency f of the compressor 10 is lower than the frequency threshold value f0. The controller 90 performs control to open the injection valve 31 if the driving frequency f of the compressor 10 is higher than or equal to the frequency threshold value f0.

In the modification, the injection valve 31 is similarly controlled to cause the mixture of the liquid refrigerant and the stabilizer to flow toward the suction side of the compressor 10 through the injection pipe 30, so that a portion of the stabilizer flowing through a condenser returns to the compressor 10 without passing through an evaporator. Accordingly, the stabilizer can continue to flow toward the discharge side of the compressor 10 until the stabilizer in the condenser is depleted.

Embodiment 3

FIG. 8 is a triangular graph illustrating the composition of refrigerant according to Embodiment 3 of the present disclosure. In Embodiment 3, the air-conditioning apparatus 100 or 200 according to Embodiment 1 or 2 is used, and the composition of the refrigerant is defined. With regard to a mixture ratio in FIG. 8, the mass ratios of R32, R125, and $CF_3I$ at each of points indicated by reference signs A to H are expressed as (R32 mass ratio, R125 mass ratio, $CF_3I$ mass ratio). A refrigerant mixture used desirably contains R32 (difluoromethane), R125 (pentafluoroethane), and $CF_3I$ (trifluoroiodomethane), has an operating pressure that is about the same as that of R410A, and has a GWP of 750 or lower.

An operating pressure that is about the same as that of R410A is, for example, an operating pressure higher than or equal to that of R125, which is a low-pressure component of R410A. With the operating pressure being higher than or equal to that of R125, performance deterioration caused by pressure loss can be suppressed. The operating pressure of R410A is 3.1 MPa at 50 °C, and the operating pressure of R125 is 2.5 MPa at 50 °C. Since a pressure loss is inversely proportional to the density, the pressure loss of R125 is about 1.2 times (= 3.1 MPa/2.5 MPa) the pressure loss of R410A at the same flow rate.

According to the Law Concerning the Discharge and Control of Fluorocarbons, the permissible value for the GWP of refrigerant that can be used in single-split air conditioning air-conditioning apparatuses is 750. Therefore, the GWP is desirably 750 or lower. The GWP is described based on values in the IPCC Fourth Assessment Report. All values of the GWP are in units of [kg/kg-$CO_2$ (100 years)]. Since R32 used as alternative refrigerant to R410A in, for example, room-air conditioning apparatuses has a GWP of 675, refrigerant used as an alternative to R32 desirably has a GWP of 675 or lower.

In FIG. 8, a line segment AB indicates an isoline on which the operating pressure at 50 °C is 2.5 MPa, which is the same as that of R125. A line segment BC indicates an isoline on which the GWP is 750. A line segment CD indicates an isoline on which the concentration of $CF_3I$ is 0 % by mass. Thus, a region surrounded by the rectangle ABCD indicates a composition range where the operating pressure is higher than or equal to that of R125 and the GWP is 750 or lower.

In the composition range surrounded by the rectangle ABCD, a composition range where the flammability is low and equivalent to being non-flammable is more desirable since such a composition range provides high safety if the refrigerant leaks. The flammability is categorized in accordance with the explosion limit concentration, combustion rate, and combustion energy.

According to ASHRAE, R32 is classified as being slightly flammable and R125 is classified as being non-flammable. $CF_3I$ is not registered as refrigerant but is a substance normally used as a fire extinguishing agent. According to NEDO (New Energy and Industrial Technology Development Organization), $CF_3I$ exists at a percentage of 3 % by mass or higher in the air and is thus effective for suppressing a combustion reaction.

Since the explosion limit concentration of R32 is 14.4 % by mass, $CF_3I$ may be mixed such that $CF_3I$ exists at a percentage of 3 % by mass when the refrigerant mixture leaks and R32 exists at 14.4 % by mass in the air. Specifically, when the refrigerant mixture contains 20 % by mass (= 3 % by mass/14.4 % by mass) or higher of $CF_3I$, the refrigerant mixture is expected to be equivalent to being non-flammable.

A line segment EF indicates an isoline on which the concentration of $CF_3I$ is 20 % by mass. Thus, a region surrounded by a rectangle ABEF indicates a composition range where the operating pressure is higher than or equal to that of R125 and the GWP is 750 or lower. In the composition range of the rectangle ABEF, a temperature glide indicating a difference between the dew point and the boiling point of the refrigerant mixture is 5 °C or smaller.

In a case where the temperature glide is about 5 °C, a sufficient temperature difference between the refrigerant and the heat-source fluid cannot be ensured, possibly causing the performance of the heat exchangers to deteriorate. To solve this, a Lorentz cycle in which the refrigerant and the heat-source fluid flow in opposite directions is desirably used, or refrigerant with a temperature glide of about 0 °C to 2 °C is desirably used. A line GH indicates an isoline on which the temperature glide is 2 °C.

Thus, a region surrounded by a rectangle EFGH indicates a composition range where the refrigerant has a temperature glide of 2 °C or lower, has an operating pressure higher than or equal to that of R125, is non-flammable, and has a GWP of 750 or lower. Accordingly, the refrigerant used is in the region surrounded by the rectangle EFGH so that the performance of the heat exchangers can be maintained, while the refrigerant used has an operating pressure higher than or equal to that of R125, is non-flammable, and has a GWP of 750 or lower.

Embodiment 4

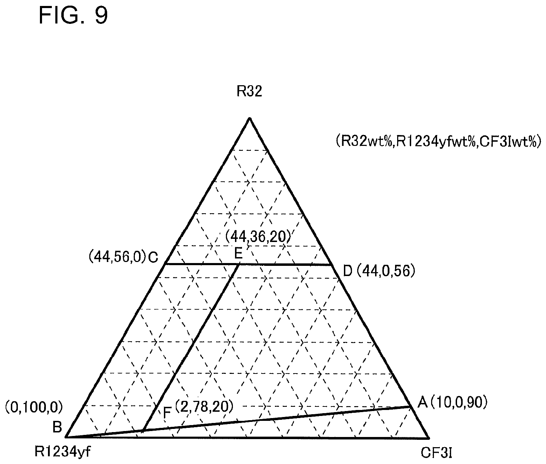

FIG. 9 is a triangular graph illustrating the composition of refrigerant according to Embodiment 4 of the present disclosure. In Embodiment 4, the air-conditioning apparatus 100 or 200 according to Embodiment 1 or 2 is used, and the composition of the refrigerant is defined. With regard to a mixture ratio in FIG. 9, the mass ratios of R32, R1234yf, and $CF_3I$ at each of points indicated by reference signs A to F are expressed as (R32 mass ratio, R1234yf mass ratio, $CF_3I$ mass ratio). A refrigerant mixture used desirably contains R32 (difluoromethane), R1234yf (2, 3, 3, 3-tetrafluoro-1-propene), and $CF_3I$ (trifluoroiodomethane), has an operating pressure that is about the same as that of R1234yf, and has a GWP of 300 or lower.

According to the Kigali Amendment to the Montreal Protocol, developed countries need to reduce the total GWP (refrigerant filling amount in air-conditioning apparatus × GWP) to 15 % from the current percentage by the year 2036. In order to comply with this regulation, refrigerant with a GWP that is 15 % or lower of that of R410A, specifically, a GWP of 300 or lower, is desirably used. Examples of refrigerant with a GWP of 300 or lower include R1234yf (GWP < 1) and R290 (GWP = 3). However, R1234yf and R290 are not non-flammable. FIG. 9 illustrates the composition of refrigerant that is non-flammable and that has a GWP of 300 or lower in a range where the operating pressure is higher than or equal to that of R1234yf.

In FIG. 9, a line segment AB indicates an isoline on which the operating pressure at 50 °C is 1.3 MPa, which is the same as that of R1234yf. A line segment BC indicates an isoline on which the concentration of $CF_3I$ is 0 % by mass. A line segment CD indicates an isoline on which the GWP is 300. A line segment AD indicates an isoline on which the concentration of R1234yf is 0 % by mass. Thus, a region surrounded by the rectangle ABCD indicates a composition range where the operating pressure is higher than or equal to that of R1234yf and the GWP is 300 or lower.

A line segment EF indicates an isoline on which the concentration of $CF_3I$ is 20 % by mass. Thus, a region surrounded by a rectangle ADEF indicates a composition range where the refrigerant has an operating pressure higher than or equal to that of R1234yf, is non-flammable, and has a GWP of 300 or lower. The operating pressure of R410A is 3.1 MPa at 50 °C, and the operating pressure of R1234yf is 1.3 MPa at 50 °C. Since a pressure loss is inversely proportional to the density, the pressure loss of R1234yf is about 2.4 times (= 3.1 MPa/1.3 MPa) the pressure loss of R410A at the same flow rate.

LIST OF REFERENCE SIGNS

| | |
|---|---|
| 1 | outdoor unit |
| 2, 2a, 2b | indoor unit |
| 3 | liquid main pipe |
| 4 | gas pipe |
| 5a, 5b | liquid branch pipe |
| 6a, 6b | gas branch pipe |
| 10 | compressor |
| 11 | flow switching device |
| 12 | first heat exchanger |
| 15 | heat-source-side air-sending device |
| 20, 20a, 20b | expansion unit |
| 20, 21a, 21b | second heat exchanger |
| 22, 22a, 22b | load-side air-sending device |
| 30 | injection pipe |
| 31 | injection valve |
| 40 | discharge pipe |
| 41 | first pipe |
| 42 | second pipe |
| 43 | suction pipe |
| 44 | third pipe |
| 50 | riser gas pipe |
| 90 | controller |
| 100, 100a, 200, 200a | air-conditioning apparatus |

**Claims**

1. An air-conditioning apparatus comprising a refrigerant circuit in which a compressor, a condenser, an expansion unit, and an evaporator are connected by a pipe and through which a working fluid obtained by adding a stabilizer to a refrigerant mixture containing $CF_3I$ flows,
   wherein the pipe includes a riser gas pipe erected and extending from an outlet of the evaporator to an inlet of the condenser via the compressor, and wherein an inner diameter of the riser gas pipe is smaller than or equal to an upper-limit threshold value D1 determined from Math. (1) indicated below:
   Math. 1

$$Ug = 0.8 \times (g \times D1(rl - rg)/rg)^{0.5} \qquad \ldots(1)$$

   Ug: flow speed [m/s] of gas
   D1: inner diameter [m] of pipe
   g: gravitational acceleration [m/s$^3$] rl: liquid density [kg/m$^3$] of stabilizer
   rg: gas density [kg/m$^3$] of refrigerant

2. The air-conditioning apparatus of claim 1,
   wherein the inner diameter of the riser gas pipe is larger than or equal to a lower-limit threshold value D2 determined from Math. (3.1), Math. (3.2), and Math. (3.3) indicated below:
   Math. 3

$$Pe - \Delta P = Patm \qquad \ldots(3.1)$$

$$\Delta P = f \times L/D2 \times rg \times Ug^2/2 \qquad \ldots(3.2)$$

$$f = 0.3164Re^{-0.25} \quad (3.3)$$

   Pe: evaporating pressure [Pa] $\Delta$P: pressure loss [Pa] Patm: atmospheric pressure [Pa] f: pipe friction coefficient [-] L: pipe length [m] D2: inner diameter [m] of pipe
   rg: gas density [kg/m$^3$] of refrigerant
   Ug: flow speed [m/s] of gas
   Re: Reynolds number [-]

3. The air-conditioning apparatus of claim 1 or 2,
   wherein the upper-limit threshold value D1 is 24 mm for a pipe extending from the outlet of the evaporator to an inlet of the compressor and 19 mm for a pipe extending from an outlet of the compressor to the inlet of the condenser.

4. The air-conditioning apparatus of any one of claims 1 to 3, further comprising:

   an injection pipe branching off from an outlet of the condenser and
   connected to an inlet of the compressor;
   an injection valve provided in the injection pipe and adjusting an amount of the working fluid flowing through the injection pipe; and
   a controller configured to perform control to open the injection valve in a case where a driving frequency of the compressor is lower than a frequency threshold value.

5. The air-conditioning apparatus of any one of claims 1 to 4,
   wherein the refrigerant mixture contains R32, R125, and $CF_3I$ in a mixing ratio of 31 % by mass or higher, 15 % by mass or lower, and 20 % by mass or higher, respectively, has a GWP of 750 or lower, and has an operating pressure higher than or equal to an operating pressure of R125.

6. The air-conditioning apparatus of any one of claims 1 to 4,
   wherein the refrigerant mixture contains R32, R1234yf, and $CF_3I$ in a mixing ratio of 44 % by mass or lower, 100 % by mass or lower, and 20 % by mass or higher, respectively, has a GWP of 300 or lower, and has an operating pressure higher than or equal to an operating pressure of R1234yf.

7. The air-conditioning apparatus of any one of claims 1 to 6,
wherein the stabilizer has a function of suppressing a reaction in which $CF_3I$ changes into another substance as a result of decomposition, compounding, or partial atomic replacement, and is a diene or diene-based compound that is constantly a liquid within internal temperature and pressure ranges.

FIG. 1

FIG. 2

FIG. 3

FIG. 4

FIG. 5

FIG. 6

FIG. 7

FIG. 8

FIG. 9

(R32wt%,R1234yfwt%,CF3Iwt%)

R32

(44,56,0)C    (44,36,20)  E    D (44,0,56)

(0,100,0)
B    F (2,78,20)    A (10,0,90)

R1234yf    CF3I

## INTERNATIONAL SEARCH REPORT

| | International application No. |
|---|---|
| | PCT/JP2018/022405 |

A.   CLASSIFICATION OF SUBJECT MATTER
Int.Cl.  F25B41/00(2006.01)i, C09K5/04(2006.01)i, F24F1/26(2011.01)i,
F25B1/00(2006.01)i

According to International Patent Classification (IPC) or to both national classification and IPC

B.   FIELDS SEARCHED

Minimum documentation searched (classification system followed by classification symbols)
Int.Cl.  F25B41/00, C09K5/04, F24F1/26, F25B1/00

Documentation searched other than minimum documentation to the extent that such documents are included in the fields searched
　　　Published examined utility model applications of Japan　　　1922-1996
　　　Published unexamined utility model applications of Japan　　　1971-2018
　　　Registered utility model specifications of Japan　　　1996-2018
　　　Published registered utility model applications of Japan　　　1994-2018

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y | JP 2015-038214 A (HONEYWELL INTERNATIONAL INC.) 26 February 2015, paragraphs [0009]-[0014], [0055], [0070], [0092] & US 2012/0187330 A1, paragraphs [0009]-[0024], [0070]-[0072], [0093], [0126], [0127] & WO 2013/138123 A1 & EP 2825610 A1 & KR 10-2007-0090939 A & CN 101155892 A | 1-7 |
| Y | JP 07-174439 A (MITSUBISHI ELECTRIC CORPORATION) 14 July 1995, paragraphs [0009], [0021]-[0034], fig. 1 (Family: none) | 1-7 |

☒ Further documents are listed in the continuation of Box C.　　　☐ See patent family annex.

| | | | |
|---|---|---|---|
| * | Special categories of cited documents: | "T" | later document published afterthe international filing date or priority date and not in conflict with the application but cited to understand the principle or theory underlying the invention |
| "A" | document defining the general state of the art which is not considered to be of particular relevance | | |
| "E" | earlier application or patent but published on or after theinternationalfiling date | "X" | document of particular relevance; theclaimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; theclaimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22.08.2018 | 04.09.2018 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
| --- |
| PCT/JP2018/022405 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2007-051824 A (MATSUSHITA ELECTRIC INDUSTRIAL CO., LTD.) 01 March 2007, paragraph [0008] & CN 1916520 A | 2 |
| Y | JP 2016-180564 A (TOSHIBA CARRIER CORP.) 13 October 2016, paragraph [0022] & EP 3073211 A1, paragraph [0031] | 2 |
| Y | JP 58-022858 A (TOKYO SHIBAURA ELECTRIC CO., LTD.) 10 February 1983, page 3, lower right column, lines 7-12 & US 4432215 A, column 5, lines 21-32 & AU 8652382 A & KR 10-1983-0010324 A | 2 |
| Y | JP 2016-080231 A (MITSUBISHI ELECTRIC CORPORATION) 16 May 2016, paragraphs [0012]-[0020] & US 2016/0109169 A1, paragraphs [0016]-[0022] & EP 3009770 A1 & CN 205102469 U | 2 |
| Y | JP 2013-002744 A (PANASONIC CORPORATION) 07 January 2013, paragraphs [0025]-[0074], fig. 1-6 & EP 2535674 A2, paragraphs [0013]-[0041], fig. 1-8 & CN 102829568 A | 4 |
| A | JP 2008-506793 A (HONEYWELL INTERNATIONAL INC.) 06 March 2008, entire text, all drawings & US 2009/0092556 A1 & WO 2006/112881 A1 & EP 2336266 A1 & KR 10-2007-0007935 A & CN 1977023 A | 1-7 |
| A | JP 2009-024152 A (DAIKIN INDUSTRIES, LTD.) 05 February 2009, entire text, all drawings (Family: none) | 1-7 |
| A | JP 2009-542883 A (SOLVAY FLUOR GMBH) 03 December 2009, entire text, all drawings & US 2010/0025619 A1 & WO 2008/006866 A1 & EP 2044167 A1 & KR 10-2009-0027771 A & CN 101553551 A | 1-7 |
| A | JP 2007-248001 A (MITSUBISHI ELECTRIC CORPORATION) 27 September 2007, entire text, all drawings (Family: none) | 1-7 |
| A | WO 2016/125239 A1 (MITSUBISHI ELECTRIC CORPORATION) 11 August 2016, entire text, all drawings & CN 107110565 A | 1-7 |

Form PCT/ISA/210 (continuation of second sheet) (January 2015)

**EP 3 742 084 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8277389 A

- JP 2016176080 A